# EUROPÄISCHE PATENTSCHRIFT

(11) **EP 3 754 229 B1**
(45) Veröffentlichungstag und Bekanntmachung des Hinweises auf die Patenterteilung: **25.01.2023**
(21) Anmeldenummer: 20190060.2
(22) Anmeldetag: 24.05.2017
(51) Int. Cl.: F16K 1/52, B05C 5/02, F16K 31/06

(54) **VENTIL FÜR FLIESSFÄHIGE MEDIEN, INSBESONDERE LEIMVENTIL**
VALVE FOR FLOWABLE MEDIA, IN PARTICULAR GLUE VALVE
VANNE POUR LIQUIDES, EN PARTICULIER VANNE À COLLE

(30) Priorität: 06.06.2016 DE 102016006785
(43) Veröffentlichungstag der Anmeldung: 23.12.2020
(62) Teilanmeldung aus: 17000884.1
(73) Patentinhaber: Focke & Co. (GmbH & Co. KG), 27283 Verden (DE)
(72) Erfinder: Walter, Jan-Christian, 21357 Bardowick (DE); Stegen, Marc-Daniel, 22159 Hamburg (DE)
(74) Vertreter: Aulich, Martin

(56) Entgegenhaltungen:
- DE-A1- 3 742 414
- DE-A1-102008 022 851
- DE-A1-102009 015 231
- DE-A1-102014 001 897
- DE-T2- 69 006 161
- US-A- 4 647 011
- US-A1- 2006 169 936

## Beschreibung

Die Erfindung betrifft ein Ventil für fließfähige Medien mit den Merkmalen des Oberbegriffs des Anspruchs 1.

Derartige Ventile sind in der Regel aus einer Vielzahl von Komponenten aufgebaut. Ein besonderes Problem besteht darin, bei der Herstellung eines solchen Ventils das Anschlagteil der Ventilhubeinstelleinheit, die Anordnung der auf dem Spulenträger sitzenden Spule sowie die Anordnung des Verschlussorgans optimal zueinander auszurichten. Auch Fertigungstoleranzen erschweren dies. Ungenaue Ausrichtungen dieser Komponenten führen allerdings zu nicht optimalem Verhalten des jeweiligen Ventils.

Weiter ist nachteilig, dass Änderungen der axialen Stellung des Anschlagteils durch Rotation des Einstellmittels in der Regel auch zu einer Änderung der Drehlage des insofern mitrotierenden Anschlagteils führen. Wenn das Anschlagteil nicht exakt rotationssymmetrisch um eine Längsmittelachse ausgebildet ist, können hierdurch ungewollte Nebenwirkungen entstehen. Beispielsweise in einem Fall, in dem einzelne Dauermagneten an dem Anschlagteil angebracht sind, die mit Dauermagneten an dem Verschlussorgan zur Aufbringung einer Schließkraft zusammenwirken, kann eine solche Änderung der Drehlage des Anschlagteils gegebenenfalls zu einem veränderten Magnetfeld und entsprechend zu einer veränderten Schließkraft führen.

Ausgehend hiervon ist es Aufgabe der vorliegenden Erfindung, die eingangs genannten Ventile weiterzuentwickeln.

Diese Aufgabe wird gelöst durch ein Ventil mit den Merkmalen des Anspruchs 1.

Ein erfindungsgemäßes Ventil für fließfähige Medien entsprechend Anspruch 1 umfasst ein Ventilgehäuse, ein in einem Ventilinnenraum durch einen Elektro-Magneten bewegbares Verschlussorgan, insbesondere Ventilstößel, das mit einem Verschlussstück in Schließstellung des Ventils an einem Ventilsitz anliegt, und eine Ventilhubeinstelleinheit zur Einstellung des Ventilhubs, die ein mindestens abschnittsweise in dem Ventilinnenraum angeordnetes, längliches, in seiner axialen Stellung in dem Ventilinnenraum durch Rotation eines Einstellmittels der Ventilhubeinstelleinheit veränderbares Anschlagteil umfasst, das die Bewegung des Verschlussorgans in Richtung der Ventilhubeinstelleinheit begrenzt. Die Ventilhubeinstelleinheit ist derart ausgebildet, dass das Anschlagteil bei Rotation des Einstellmittels nur axial bewegt wird, ohne dass das Anschlagteil mitrotiert.

Derartige Ventile, bei denen das Anschlagteil bei Rotation des Einstellmittels nur axial bewegt wird, ohne dass das Anschlagteil mitrotiert, sind beispielsweise aus der DE 690 06 161 T2 oder der DE 10 2009 015 231 A1 bekannt.

Hierdurch wird erreicht, dass die Drehlage des Anschlagteils bei einer axialen Bewegung desselben unverändert bleibt. Die aus einer veränderten Drehlage ansonsten im Stand der Technik ggf. entstehenden Nachteile, vgl. die Erläuterungen weiter oben, werden hierdurch wirksam vermieden.

Ein solches Ventil kann zusätzlich ein, mehrere oder sämtliche der nachfolgend genannten Merkmale des Ventils sowie ein, mehrere oder sämtliche Merkmale aller bevorzugter Weiterbildungen in dieser Anmeldung in Alleinstellung oder jeder sinnvollen Kombination desselben aufweisen. Insbesondere kann es auch den oben spezifizierten Spulenträger als zentrales Bauteil aufweisen, muss es aber nicht.

Was konkret das Einstellmittel betrifft, so ist es insbesondere um seine Längsmittelachse drehbar mit dem Anschlagteil verbunden.

Dabei ist die drehbare Verbindung des Einstellmittels derart ausgebildet, dass das Anschlagteil bezogen auf Axialbewegungen des Einstellmittels auf das Verschlussorgan zu bzw. von diesem weg mit diesem zwangsgekoppelt ist.

In weiterer Ausbildung dieser Gedanken verfügt das Einstellmittel über ein Außengewinde, mit dem es in ein Bewegungsgewinde einer Aufnahme für das Einstellmittel eingeschraubt ist, und über einen drehfest mit diesem verbundenen Zapfen, der drehbar in einem länglichen, insbesondere zylindrischen Hohlraum einer insbesondere einstückig mit dem Anschlagteil drehfest verbundenen Zapfenaufnahme gelagert ist. Der Zapfen ist dabei in der Zapfenaufnahme gegen axiale Relativbewegungen zwischen Zapfen und Zapfenaufnahme gesichert, insbesondere durch eine Formschlussverbindung zwischen Zapfen und Zapfenaufnahme.

Das Einstellmittel kann bevorzugt eine Einstellschraube sein.

Was das Anschlagteil betrifft, so ist es an einem ortfesten Bauteil des Ventils drehsicher, aber in Axialrichtung bewegbar gelagert, insbesondere durch Reibschlussverbindung, bevorzugt durch einen Dichtungsring zwischen dem Anschlagteil und dem ortsfesten Bauteil.

Das ortsfeste Bauteil des Ventils, an dem das Anschlagteil drehsicher, aber in Axialrichtung bewegbar gelagert ist, kann dabei ein oder der oben erwähnte Spulenträger für die Spule des Elektro-Magneten sein, auf dem die Windungen einer Spule des Elektro-Magneten aufgewickelt sind, oder ggf. ein oder das oben bereits erwähnte Verbindungsbauteil, das in eine bzw. die Aufnahme des Spulenträgers für die Ventilhubeinstelleinheit eingesetzt ist.

An dem bevorzugt einstückig ausgebildeten Spulenträger des Ventils, auf dem die Windungen einer Spule des Elektro-Magneten aufgewickelt sind, könnte (auch) die Ventilhubeinstelleinheit befestigt sein.

Der Spulenträger könnte - wie weiter oben bereits beschrieben - einen Spulenabschnitt aufweisen, auf den die Spule aufgewickelt ist, sowie einen sich daran anschließenden Kopfabschnitt mit einer (endständigen) Aufnahme für die Ventilhubeinstelleinheit.

In weiterer Ausbildung der Erfindung verfügt das Anschlagteil an seinem dem Verschlussorgan zugekehrten Ende über mindestens einen der Dauermagneten, der mit mindestens einem gleichgerichteten Dauermagneten des Verschlussorgans an dessen dem Anschlagteil zugekehrten Ende derart zusammenwirkt, dass die Magnete in Schließstellung des Verschlussorgans eine Schließkraft auf das Verschlussorgan ausüben.

Ein erfindungsgemäßes Ventil für fließfähige Medien kann ein Ventilgehäuse und ein in diesem durch einen Elektro-Magneten bewegbares Verschlussorgan umfassen, insbesondere einen Ventilstößel, das mit einem Verschlussstück in Schließstellung des Ventils an einem Ventilsitz anliegt und das mindestens teilweise in einem insbesondere durchgehenden Innenraum eines bevorzugt einstückig ausgebildeten Spulenträgers sitzt, auf dem die Windungen einer Spule des Elektro-Magneten aufgewickelt sind. Weiter kann es eine Ventilhubeinstelleinheit mit einem mindestens abschnittsweise in dem Innenraum des Spulenträgers angeordneten, länglichen, eine Bewegung des Verschlussorgans in Richtung der Ventilhubeinstelleinheit begrenzenden Anschlagteil umfassen. Das Ventil kann dabei in besonderer Weise dadurch gekennzeichnet sein, dass die Ventilhubeinstelleinheit an dem Spulenträger befestigt ist.

Der Spulenträger kann eine zentrale Rolle bzw. Stellung in dem Ventil einnehmen. Die Befestigung der Ventilhubstelleinheit an dem Spulenträger kann unter anderem dazu führen, dass die Ventilhubstelleinheit und insbesondere das Anschlagteil einerseits und das Verschlussorgan andererseits, das sich während des Betriebs des Ventils in dem Innenraum des Spulenträgers bewegt, bereits während des Ventilzusammenbaus in fest vorgegebener Relativstellung zueinander befinden bzw. geeignet und dauerhaft zueinander ausgerichtet sind. Bei den Ventilen des Standes der Technik dagegen ist dies nicht der Fall. Dort ist die Ventilhubeinstelleinheit regelmäßig mit einem separaten Gehäuseteil verbunden.

Vorzugsweise verfügt die Ventilhubeinstelleinheit, wie oben bereits angedeutet, über einen mit einem ortsfesten Ventilbauteil verbundenen Anschlagteilträger, an dem das Anschlagteil befestigt ist. Der Anschlagteilträger kann beispielsweise ein Einstellmittel der Ventilhubeinstelleinheit sein, etwa eine Einstellschraube, das unmittelbar mit dem (ortsfesten) Spulenträger verbunden ist, insbesondere verschraubt. Das Einstellmittel als Anschlagträger kann aber auch über ein zusätzliches Verbindungsbauteil, etwa eine Mutter, mit dem Spulenträger verbunden bzw. verschraubt sein.

Was den Spulenträger betrifft, so weist dieser bevorzugt einen Spulenabschnitt auf, auf den die Spule aufgewickelt ist, sowie einen sich daran anschließenden (oberen) Kopfabschnitt mit einer (endständigen) Aufnahme für die Ventilhubeinstelleinheit. Die Aufnahme kann dann entsprechend mit einem Gewinde versehen sein, sodass der oben erwähnte Anschlagteilträger/das Verbindungsteil in dieses eingeschraubt werden kann bzw. eingeschraubt ist.

Bevorzugt umgeben der Spulenabschnitt und der Kopfabschnitt des Spulenträgers den Innenraum desselben (abschnittsweise) seitlich bzw. schließen diesen ein.

In weiterer Ausbildung dieses Gedankens kann dann die oben erwähnte (endständige) Aufnahme des Spulenträgers für die Ventilhubeinstelleinheit durch einen von dem Kopfabschnitt umgebenen Endabschnitt des Spulenträgerinnenraums und durch den diesen Endabschnitt umgebenen Wandungsabschnitt des Kopfabschnitts gebildet sein.

In dem Kopfabschnitt des Spulenträgers kann sich ein an dessen Außenseite beginnender, bis zum Innenraum des Spulenträgers verlaufender Mediumzufuhrkanal befinden, durch den dem Innenraum das durch das Ventil auszugebene Medium zuführbar ist.

Was die Ausbildung des Innenraums des Spulenträgers betrifft, so kann er im Bereich des Kopfabschnitts größere Querabmessungen aufweisen als im Bereich des Spulenabschnitts.

Bevorzugt ist der Spulenträger aus einem metallischen Werkstoff mit hoher Wärmeleitfähigkeit gefertigt.

In einer besonders bevorzugten Weiterbildung der Erfindung sind das Verschlussorgan und der Ventilsitz Teil einer Dosiereinheit, die - wie die Ventilhubeinstelleinheit - ebenfalls insbesondere lösbar an dem Spulenträger befestigt ist, bevorzugt mittels einer Schraubverbindung. In diesem Fall befinden sich nicht nur die die Ventilhubstelleinheit und das Verschlussorgan bereits während des Ventilzusammenbaus in fest vorgegebener Relativstellung zueinander und sind dauerhaft zueinander ausgerichtet, sondern zusätzlich noch die Dosiereinheit bzw. insbesondere das Verschlussorgan, das Teil derselben ist.

Insbesondere können der Spulenträger, die Ventilhubeinstelleinheit und die Dosiereinheit derart ausgebildet und zueinander ausgerichtet sein, dass das Anschlagteil der Ventilhubeinstelleinheit und das Verschlussorgan der Dosiereinheit mittig in dem Innenraum des Spulenträgers sowie aufeinanderfolgend entlang einer gemeinsamen (Längsmittel-)Achse positioniert sind.

Weiter ist das Verschlussorgan vorzugsweise durch eine bzw. die (hohlzylindrische) Wandung des Spulenabschnitts des Spulenträgers in dem Innenraum in axialer Richtung geführt.

Bevorzugt sind der von der Aufnahme für die Ventilhubeinstelleinheit umgebene Innenraumabschnitt des Spulenträgers, der von dem Spulenabschnitt umgebene Innenraumabschnitt desselben und dessen von der Aufnahme für die Dosiereinheit umgebener Innenraumabschnitt entlang einer gemeinsamen (Längsmittel-)Achse angeordnet.

Die Dosiereinheit kann zweckmäßigerweise noch eine den Ventilsitz bildende Düse umfassen.

Der Innenraum des Spulenträgers kann an eine mindestens bereichsweise von dem Ventilsitz der Dosiereinheit umgebenen Ventilkammer der Dosiereinheit anschließen bzw. in diese münden.

Weiter weist der Spulenträger bevorzugt einen Fußabschnitt mit einer (endständigen) Aufnahme für die Dosiereinheit auf, mit der die Dosiereinheit insbesondere lösbar verbunden ist, insbesondere verschraubt, bevorzugt mittels eines Befestigungsteils der Dosiereinheit, wie etwa einer (Überwurf-)Mutter.

Der Fußabschnitt ist dann vorzugsweise an einem Ende des Spulenträgers angeordnet, der Kopfabschnitt am anderen bzw. entgegengesetzten Ende desselben.

Weitere Merkmale der vorliegenden Erfindung ergeben sich aus den beigefügten Patentansprüchen, der nachfolgenden Beschreibung eines bevorzugten Ausführungsbeispiels der Erfindung sowie aus den beigefügten Zeichnungen.

Darin zeigt:
- Fig. 1: eine Ventilanordnung aus mehreren erfindungsgemäßen Einzelventilen in Draufsicht,
- Fig. 2: einen Schnitt entlang der Schnittlinie II-II in Fig. 1,

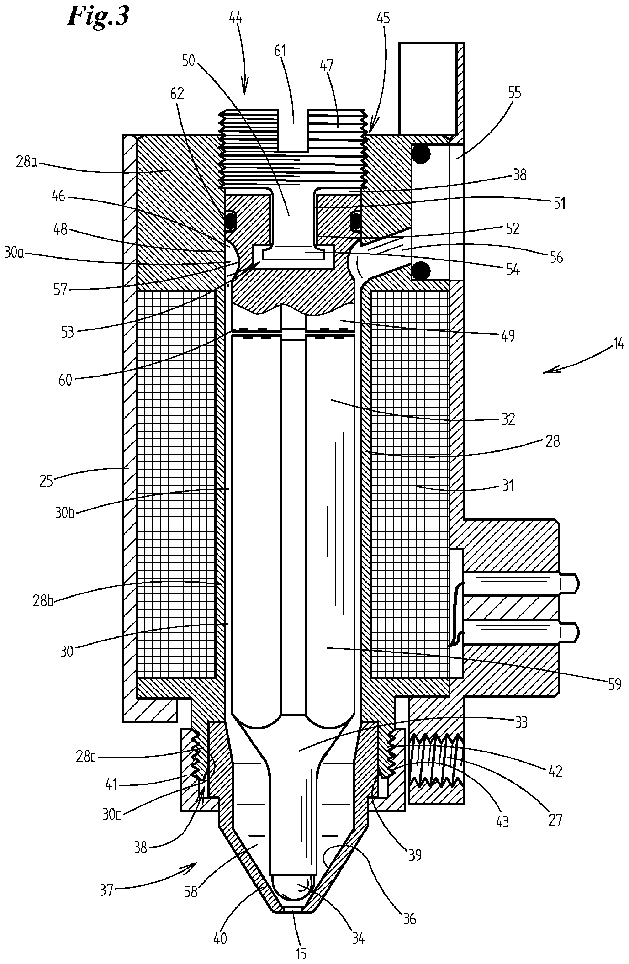

- Fig. 3: die Einzelheit III aus Fig. 2 in vergrößerter Darstellung.

Nachfolgend werden Details erfindungsgemäßer (Magnet-)Ventile 14 erläutert. Vorliegend sind diese Ventile 14 Teil einer Ventilanordnung 10 mit mehreren Einzelventilen 14. Es versteht sich aber, dass die Erfindung auch Einzelventile bzw. einzeln betriebene Ventile außerhalb einer solchen Anordnung 10 umfassen kann.

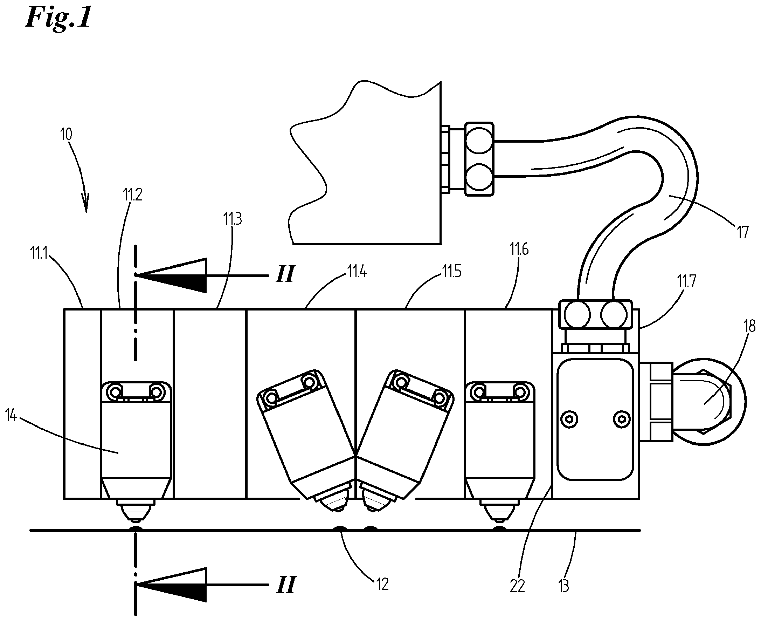

Die in Fig. 1 gezeigte Ventilanordnung 10 bzw. Einrichtung zum Auftragen von fließfähigen Medien auf Oberflächen ist aus mehreren Einzelmodulen 11.1-11.7 aufgebaut. Im Rahmen der Anmeldung wird die Gesamtheit dieser Einzelmodule vereinfachend mit 11.1-11.7 bezeichnet. Eine ähnliche Ventilanordnung ist auch in der DE 10 2014 001 897 A1 offenbart, deren Inhalt hiermit integriert wird.

In dem gezeigten Ausführungsbeispiel dient die Ventilanordnung 10 zum (mehrbahnigen) Auftragen von Leim, insbesondere Heißleim, auf Oberflächen von bei der Herstellung von Zigarettenpackungen eingesetzten Zuschnitten oder Materialbahnen auf Papier, Folie oder dergleichen. Es liegt aber natürlich auch im Rahmen der Erfindung, mit der Ventilanordnung 10 andere fluide oder fließfähige Medien, wie etwa Farben, Lacke oder dergleichen, auf Oberflächen von Gegenständen anderer Art aufzutragen.

Mit den Ventilen 14 der Ventilanordnung 10 werden jeweils einzelne (kleine) Medium- bzw. Leimportionen 12 auf beispielsweise einen Zuschnitt 13 aufgebracht. Die Einzelmodule 11.1-11.7 sind vorliegend in Längserstreckung der Ventilanordnung 10 aufeinanderfolgend in einer gemeinsamen Reihe angeordnet. Dabei sind jeweils Paare von zwei benachbarten Einzelmodulen 11.1-11.7 lösbar miteinander verbunden. Vorliegend mittels in (durchgehenden) Schraubenlöchern 63 angeordneten Schrauben.

Einige Einzelmodule, nämlich die Einzelmodule 11.2, 11.4-11.6 weisen jeweils ein Ventil bzw. eine Ventileinheit 14 auf mit jeweiliger (unterer) Ausgabe- bzw. Dosieröffnung 15. Über diese Einzelmodule 11.2, 11.4-11.6 mit jeweiliger Ventileinheit 14, nämlich über die jeweilige Dosieröffnung 15 derselben, wird das fließfähige Medium im Prozess auf die Oberfläche des Zuschnitts 12 aufgebracht.

Das Einzelmodul 11.7 dient zum Anschluss der Ventilanordnung 10 an insbesondere von der übergeordneten (Verpackungs-)Maschine, insbesondere der Maschinensteuerung, kommende Stromversorgungsleitungen und gegebenenfalls zusätzliche Steuerleitungen 16. Die Leitungen 16 sind vorliegend im Inneren eines Kabelschlauchs 17 geführt. Ausgehend von dem Modul 11.7 werden die Leitungen 16 durch die Ventilanordnung 10 zu den einzelnen Modulen 11.2, 11.4-11.6 mit Ventileinheit 14 geführt.

Das Modul 11.7 dient des Weiteren zum Anschluss der Ventilanordnung 10 an eine Mediumquelle, etwa ein Heißleimtankgerät. Zu diesem Zweck endet ein entsprechender, vorliegend beheizter Mediumschlauch 18 an dem Einzelmodul 11.7. Von dem Einzelmodul 11.7 aus wird das über den Schlauch 18 geführte Medium im Inneren der Ventilanordnung 10 verteilt und zu den einzelnen Modulen 11.2, 11.4-11.6 mit Ventileinheit 14 geführt. Das Einzelmodul 11.7 dient auch zum Anschluss an bevorzugte, ebenfalls von der Mediumquelle bzw. einem Steuergerät desselben kommenden Steuerungsleitungen (nicht dargestellt). Auch diese Steuerungsleitungen sind zu den einzelnen Modulen 11.2, 11.4-11.6 mit Ventileinheit 14 geführt.

Bei den Modulen 11.1, 11.3 handelt es sich um Zwischenmodule, mit der insbesondere die Gesamtbreite der Ventilanordnung 10 beeinflusst werden kann. Zusätzlich kann vorgesehen sein, dass die Ventileinheiten 14, wie in Fig. 1 erkennbar ist, winklig zueinander angeordnet werden und dabei insbesondere seitliche Fasen am jeweiligen Gehäuse aufweisen, um den Spurabstand zwischen benachbarten Ventileinheiten 14 zu verringern.

Jedes Einzelmodul 11.1-11.7 verfügt über einen Grundkörper 19. Die einzelnen Grundkörper 19 weisen jeweils an mindestens einer (Außen-)Seite eine Flanschfläche auf, an der dann jeweils eine entsprechende Flanschfläche des Grundkörpers 19 eines bzw. des in der gemeinsamen Reihe benachbarten Einzelmoduls 11.1-11.7 anliegt. Mit Ausnahme des Abschlussmoduls 11.1 weisen sämtliche anderen Grundkörper 19 der Einzelmodule 11.2-11.7 jeweils einen vorliegend bevorzugt parallel zur Längserstreckung der Ventilanordnung 10 verlaufenden Mediumhauptkanal 20 auf. Jedenfalls die Mediumhauptkanäle 20 derjenigen Einzelmodule 11.1-11.7, bei denen in der Reihe der Einzelmodule 11.1-11.7 jeweils an zwei Seiten andere Einzelmodule angrenzen, erstrecken sich durchgehend von der einen (Außen-)Seite mit Flanschfläche zur anderen (Außen-)Seite mit Flanschfläche. Die einzelnen Mediumhauptkanäle 20 der Grundkörper 19 der einzelnen Module 11.2-11.7 schließen dabei jeweils, insbesondere fluchtend, aneinander an, sodass sich insgesamt ein durchgehender Kanal ergibt, der sich von dem Grundkörper 19 des Moduls 11.2 bis zum Grundkörper 19 des Moduls 11.7 erstreckt.

Die Grundkörper 19 der Einzelmodule 11.2, 11.4-11.6 mit Ventileinheit 14 verfügen des Weiteren jeweils über einen von dem jeweiligen Hauptkanal 20 abgehenden Mediumzweigkanal 21. Die Zweigkanäle 21 sind dabei jeweils bis zu einer Befestigungs(außen)seite 22 des jeweiligen Grundkörpers 19 geführt. An jeder Befestigungsseite 22 ist (lösbar) die jeweilige Ventileinheit 14 befestigt. Neben dem Mediumhauptkanal 20 verfügen die Grundkörper 19 der Einzelmodule 11.2-11.7 darüber hinaus jeweils über mindestens einen, bevorzugt parallel zu dem jeweiligen Mediumhauptkanal 20 verlaufenden Kabelkanal 23.

Durch den Kabelkanal 23 sind zum einen die Strom- und gegebenenfalls Steuerungsleitungen 16 für die Ventileinheiten 14 geführt, wobei die Grundkörper 19 der entsprechenden Einzelmodule 11.2, 11.4-11.6 zusätzlich jeweils über einen von dem jeweiligen Kabelkanal 23 abgehenden Kabelzweigkanal 24 verfügen, durch den durch den Kabelkanal 23 geführte Leitungen 16 weiter bis zu den Ventileinheiten 14 geführt sind. Zum anderen sind gegebenenfalls noch nicht gezeigte Stromleitungen für Heizorgane durch den Kabelkanal 23 geführt. Die Kabelkanäle 23 der einzelnen Module fluchten dabei in ähnlicher Weise wie die Mediumhauptkanäle 20 und bilden in ebenfalls ähnlicher Weise einen durchgehenden Kanal.

Was die Ventileinheiten 14 betrifft, so handelt es sich vorliegend um elektrisch betriebene (Elektro-)Magnetventile. Die Ventileinheiten 14 weisen jeweils ein Gehäuse 25 auf. Jede Ventileinheit 14 ist mit dem jeweiligen Grundkörper 19 - wie oben bereits angedeutet - lösbar verbunden, beispielsweise durch Schrauben 26, die in eine entsprechende Bohrung 27 der Ventileinheit 14 eingreifen.

Besonders wichtig ist der Aufbau des jeweiligen Ventils bzw. der jeweiligen Ventileinheit 14. Innerhalb des Gehäuses 25 ist als zentrales Bauteil des (jeweiligen) Ventils 14 ein insbesondere als spanend bearbeitetes Drehteil ausgebildeter Spulenträger 28 angeordnet.

Der Spulenträger 28 ist vorliegend einstückig ausgebildet, bevorzugt aus Metall, kann aber auch grundsätzlich mehrteilig sein.

Der Spulenträger 28 verfügt über einen von einer jeweiligen Wandung desselben umschlossenen, vorliegend durchgehenden, länglichen und aufrechten Innenraum bzw. Hohlraum (mittige Öffnung) 30. Der Innenraum 30 ist vorliegend im Wesentlichen hohlzylindrisch ausgebildet. Sowohl der Spulenträger 28 als auch entsprechend der von ihm umschlossene Innenraum 30 verfügen über mehrere Teilabschnitte.

Nämlich der Spulenträger 28 an seinem einen Ende einen (oberen) Kopfabschnitt 28a, einen sich an diesen anschließenden (mittleren) Spulen(trag)abschnitt 28b sowie an seinem anderen Ende einen sich an den Spulenabschnitt 28b anschließenden (unteren) Fußabschnitt 28c. Die jeweiligen Abschnitte 28a, 28b, 28c umschließen jeweils einen ihnen zugeordneten Teilabschnitt 30a, 30b bzw. 30c des Innenraums 30. Dabei weist der Innenraum 30a im Bereich des Kopfabschnitts 28a größere Querabmessungen auf als im Bereich des Spulenabschnitts 28b bzw. als der von dem Spulenabschnitt umgebene Innenraum 30b.

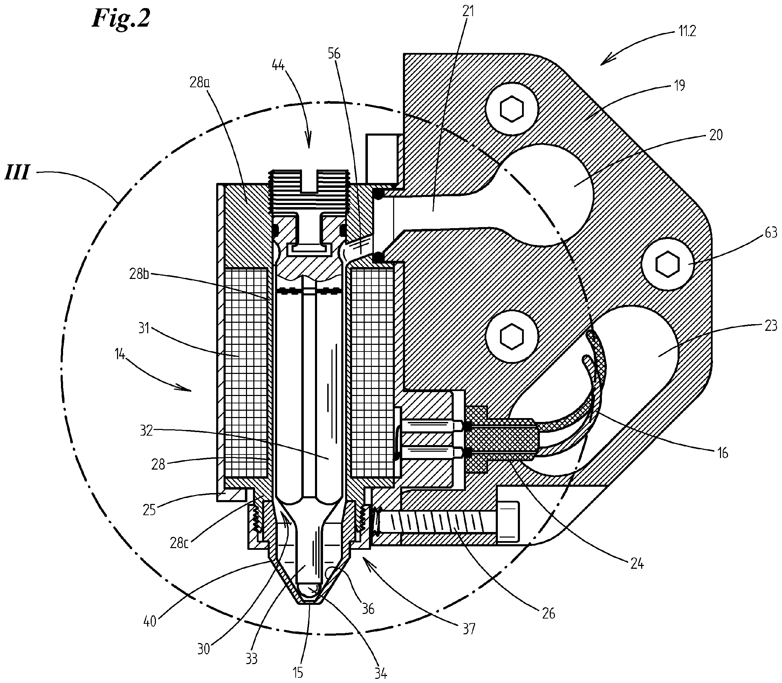

An der Außenseite des Spulenabschnitts 28b sind die Windungen eines oder mehrerer, elektrisch betriebener Spulen 31 eines bzw. des Elektro-Magneten des Ventils 14 aufgewickelt. Zu der jeweiligen Spule führen die in Fig. 2 dargestellten Strom(versorgungs)leitungen 16, über die die Spule 31 mit Betriebsstrom versorgt werden kann.

In dem Innenraum 30 des Spulenträgers 28, genauer gesagt, im Inneren des Elektro-Magneten bzw. der Spule 31 ist als Kern bzw. Anker des Elektro-Magneten ein Verschluss- bzw. Dosierorgan 32 bewegbar angeordnet, im vorliegenden Fall ein Ventilstößel.

An einem unteren Schaft 33 des Verschlussorgans 32 ist ein Verschlussmittel bzw. ein Verschlussstück 34 angeordnet, vorliegend eine Kugel. Das Verschlussmittel 34 ist der Ventil- oder Dosieröffnung 15 des Ventils 14 zugeordnet. Die Ventilöffnung 15 befindet sich mittig im Bereich eines trichterförmigen Ventilsitzes 36. Das Verschlussmittel 34 liegt dabei in Schließstellung des Ventils 14 an vorliegend konischen Sitzflächen des Ventilsitzes 36 an.

Das Verschlussorgan 32 und der Ventilsitz 36 sind Teil einer Dosiereinheit 37. Die Dosiereinheit 37 ist lösbar an dem Spulenträger 28 befestigt. Konkret ist sie mit einer endständigen Aufnahme 38 für die Dosiereinheit 37 des Fußabschnitts 28c des Spulenträgers 28 verbunden.

Die Aufnahme 38 für die Dosiereinheit 37 umfasst am freien Ende des Fußabschnitts 28c des Spulenträgers 28 eine durch einen Endabschnitt des Innenraums 30 des Spulenträgers 28 gebildete bzw. eine durch einen entsprechenden Endabschnitt des Fußabschnitts 28c umgebene Öffnung 39. Die Dosiereinheit 37, konkret im vorliegenden Fall ein den Ventilsitz 36 aufweisendes Düsenteil (Düse) 40, sitzt in der Aufnahme 38 bzw. der Öffnung 39.

Mit dem Düsenteil 40 fest verbunden ist ein Befestigungsteil 41, vorliegende eine (Überwurf-)Mutter, das lösbar mit einer (hohlzylindrischen) Aufnahmewandung 42 der Aufnahme 38 des Spulenträgers 28 bzw. des Fußabschnitts 28c desselben verbunden ist. Die Aufnahmewandung 42 weist im vorliegenden Fall zu diesem Zweck ein Gewinde 43 auf, das mit einem entsprechenden Gegengewinde des Befestigungsteils 41 verschraubt ist.

Im Bereich des Kopfabschnitts 28a des Spulenträgers 28 ist eine Ventilhubeinstelleinheit 44 angeordnet. Diese ist mit einer endständigen Aufnahme 45 für die Einstelleinheit 44 des Kopfabschnitts 28a des Spulenträgers 28 verbunden.

Die Aufnahme 45 für die Ventilhubeinstelleinheit 44 umfasst in diesem Fall am freien Ende des Kopfabschnitts 28a des Spulenträgers 28 eine durch einen Endabschnitt des Innenraums 30 des Spulenträgers 28 gebildete bzw. eine von einem entsprechenden Endabschnitt des Kopfabschnitts 28a umgebene Öffnung 46. Die Ventilhubeinstelleinheit 44, im vorliegenden Fall ein Einstellmittel 47 desselben, sitzt dabei in der Aufnahme 45 bzw. der Öffnung 46.

Konkret ist die Ventilhubeinstelleinheit 44 mit der Aufnahme 45 des Kopfabschnitts 28a des Spulenträgers 28 verschraubt bzw. mit einer Wandung 48 der Aufnahme 45.

Dazu ist das Einstellmittel 47, vorliegend eine Einstellschraube, außen mit einem Bewegungsgewinde versehen. Ein entsprechendes Gegengewinde ist innenseitig in der entsprechenden, durch den Kopfabschnitt 28a gebildeten Aufnahmewandung 48 angeordnet.

Das Einstellmittel 47 verfügt endseitig (am oberen Ende) über eine Ausnehmung 61 oder über ein Ansatzstück 61, an der bzw. an dem ein Werkzeug angesetzt werden kann, bspw. ein Innensechskantschlüssel. Durch einen Werker bewirkte Drehungen des Einstellmittels 47 um dessen Längsmittelachse bewirken dann eine axiale Bewegung des Einstellmittels 47 entweder nach oben oder nach unten, das heißt entweder in Richtung des Endes des Ventils 14, an dem die Dosieröffnung bzw. die Dosiereinheit 37 angeordnet ist - Dosierende -, oder in die entsprechende entgegengesetzte Richtung. Mit Hilfe des Einstellmittels 47 kann auf diese Weise ein mit diesem verbundenes Anschlagteil 49 der Ventilhubeinstelleinheit 44 axial in dem Innenraum 30 in Richtung des Dosierendes oder in die entgegengesetzte Richtung bewegt werden.

Die Ventilhubeinstelleinheit 44 ist dabei in besonderer Weise derart ausgebildet, dass bei Drehung des Einstellmittels 47 keine Mitrotation des Anschlagteils 49 erfolgt. Mit anderen Worten bleibt dabei die Drehlage des Anschlagteils 49 relativ zur Axialen bzw. zur Längsmittelachse des Innenraums 30 unverändert.

Hierfür ist das Einstellmittel 47 drehbar mit dem Anschlagteil 49 verbunden, wobei es bezogen auf Axialbewegungen des Einstellmittels 47 mit diesen zwangsgekoppelt ist. Diese Zwangskopplung wird vorliegend erreicht, in dem das Einstellmittel 47 über einen drehfest, insbesondere einstückig mit diesem verbundenen Zapfen 50 verfügt, der drehbar in einem länglichen, insbesondere zylindrischen Hohlraum bzw. Innenraum 51 einer insbesondere einstückig mit dem Anschlagteil 49 drehfest verbundenen Zapfenaufnahme 52 gelagert ist. Der Zapfen 50 ist dabei gegen axiale Relativbewegung zwischen Zapfen 50 und Zapfenaufnahme 52 gesichert. Nämlich vorliegend durch eine Formschlussverbindung 53 zwischen Zapfen 50 und Zapfenaufnahme 52. Konkret weist der Zapfen 50 an seinem freien Ende einen Ansatz 54 mit einem im Vergleich zum Hohlraum 51 größeren Durchmesser auf.

Sollten trotz der drehbaren Lagerung des Einstellmittels 47 an dem Anschlagteil 49 bei Drehung des Einstellmittels 47 noch Drehkräfte auf das Anschlagteil 49 übertragen werden, so verhindert ein Dichtungsring 62 zwischen Anschlagteil 49 und der Innenseite der angrenzenden Wandung 48 des Kopfabschnitts 28a des Spulenträgers 28 eine Rotation des Anschlagteils 49 durch entgegengerichtete Reibungskräfte.

Wie oben bereits erwähnt ist der Spulenträger 28 ein zentrales Bauteil des Ventils 14. Er erstreckt sich letztlich fast durch das gesamte Ventil 14 (dies muss aber nicht so sein). Sowohl die Dosiereinheit 37 als auch die Ventilhubeinstelleinheit 44 sind an dem Spulenträger 28 befestigt und das Verschlussorgan 32 in diesem bewegbar gelagert.

Dabei sind das Anschlagteil 49 der Ventilhubeinstelleinheit 44 und das Verschlussorgan 32 der Dosiereinheit 37 mittig in dem Innenraum 30 des Spulenträgers 28 sowie aufeinanderfolgend entlang einer gemeinsamen (Längsmittel-)Achse positioniert. Das Verschlussorgan 32 ist durch eine bzw. die (hohlzylindrische) Wandung des Spulenabschnitts 28b des Spulenträgers 28 in dem Innenraum 30 in axialer Richtung geführt.

Der von der Aufnahme 45 für die Ventilhubeinstelleinheit 44 umgebene Innenraumabschnitt 30a des Spulenträgers 28, der von dem Spulenabschnitt 28b umgebene Innenraumabschnitt 30b desselben und dessen von der Aufnahme 38 für die Dosiereinheit 37 umgebene Innenraumabschnitt 30c sind entlang einer gemeinsamen (Längsmittel-)Achse angeordnet.

Die vorgenannten Maßnahmen führen letztlich zu einer hervorragenden und dauerhaften Ausrichtung der vorgenannten Bauteile zueinander. Diese stellt sich - anders als im Stand der Technik - konzeptbedingt quasi automatisch ein, da es beim Zusammenbau bzw. der Montage des Ventils 14 letztlich zu einer Selbstzentrierung bzw. Selbstausrichtung der einzelnen, vorgenannten Bauteile kommt. Toleranzketten, wie sie insbesondere auftreten, wenn ein mehrteiliges Ventilgehäuse eingesetzt wird, an dessen einzelnen Gehäuseteilen die vorgenannten Bauteile befestigt sind, werden wirksam verhindert.

Was die Mediumzufuhr betrifft, so wird dem Ventil 14 das zu verarbeitende Medium (beispielsweise Leim oder ein anderes Fluid) über einen Mediumanschluss 55 zugeführt. Dabei gelangt das Medium über einen in dem Kopfabschnitt 28a des Spulenträgers 28 angeordneten, von der Außenseite des Kopfabschnitts 28a bis zum Innenraum 30 führenden Mediumkanal 56 im oberen Bereich des Leimventils 14 in den Innenraum 30 des Leimventils 14.

Im vorliegenden Fall gelangt es in den Bereich des Innenraums 30, in dem sich das Anschlagteil 49 befindet. Dieses weist für einen guten Mediumfluss daher in dem Bereich, in dem der Mediumkanal in den Innenraum 30 mündet bzw. dort, wo dieser endet, an der Außenseite oder Außenkontur eine insbesondere umlaufende, nach innen gerichtete Vertiefung oder Wölbung auf.

Im Betrieb fließt das Medium dann aus dem oberen Bereich des Innenraums 30 bzw. dem von dem Kopfabschnitt 28a begrenzten Innenraumteilabschnitt 30a in den Innenraum 30 nach unten entlang des Verschlussorgans 32 in Richtung der Dosieröffnung 15 und zwar in eine von dem Düsenteil 40 bzw. dem Ventilsitz 36 begrenzte Ventilkammer 58.

Aus der Ventilkammer 58 kann das Medium dann durch geeignete Bewegung des Verschlussorgans 32 durch Freigabe der Ausgabe- bzw. Dosieröffnung 15 gesteuert aus dem Ventil 14 herausgeführt werden bzw. herausfließen. Zu diesem Zweck wird das Verschlussorgan 32 durch geeignete Beaufschlagung des Elektro-Magneten mit elektrischem Strom unter Aufbringung einer Öffnungskraft gegen eine das Verschlussorgan 32 in den Ventilsitz drückende Rückholkraft in Richtung des Anschlagteils 49 bewegt, sodass das Medium aus der Ventilkammer 58 austreten kann.

Zu diesem Zweck umgibt die Spule 31 des Elektro-Magneten das Verschlussorgan 32 zumindest abschnittsweise. Das Verschlussorgan 32, bevorzugt ein magnetisierbares, in der Regel metallisches Kolbenstück 59 desselben, wirkt - wie oben bereits angedeutet - innerhalb der Spule 31 als Kern des Elektromagneten.

Das Verschlussorgan 32 ist vorzugsweise permanent in Schließrichtung beaufschlagt von einer Schließkraft eines Schließmittels bzw. Schließorgans. Dieses ist in dem vorliegenden Ausführungsbeispiel als ein zwei Einzelmagnete umfassender Dauermagnet ausgebildet, der eine permanente (abstoßende) Magnetkraft auf das Verschlussorgan 32 ausübt. Natürlich können auch andere, geeignete Schließkräfte ausübende Schließmittel verwendet werden, etwa Rückholfedern oder dergleichen.

Einer der Einzelmagnete des Dauermagneten ist bevorzugt am freien Ende 60 des Anschlagteils 49 angeordnet, der insofern auch als Magnethalter dient, und dessen axiale Stellung relativ zu dem Verschlussorgan 32 bzw. dessen axialer Abstand zu dem Verschlussorgan 32 in der oben bereits beschriebenen Weise eingestellt/beeinflusst werden kann.

Die gegenüberliegenden Einzelmagnete sind so positioniert, dass gleiche Pole einander zugekehrt sind, sodass eine abstoßende Kraft auf das Verschlussorgan 32 übertragen wird, nämlich die oben bereits erwähnte Schließkraft.

Das Anschlagteil 49 bildet dabei, wie oben bereits angedeutet, zusammen mit den Einzelmagneten einen einstellbaren Hubbegrenzer für das Verschlussorgan 32, der die Länge des Weges begrenzt, um den das Verschlussorgan 32 während der Öffnungsbewegung in dem Innenraum 30 maximal nach oben bewegt werden kann.

**Bezugszeichenliste:**

| | | | |
|---|---|---|---|
| 10 | Ventilanordnung | 31 | Spule |
| 11.1 | Einzelmodul | 32 | Verschlussorgan |
| 11.2 | Einzelmodul | 33 | Schaft |
| 11.3 | Einzelmodul | 34 | Verschlussmittel |
| 11.4 | Einzelmodul | 36 | Ventilsitz |
| 11.5 | Einzelmodul | 37 | Dosiereinheit |
| 11.6 | Einzelmodul | 38 | Aufnahme für Dosiereinheit |
| 11.7 | Einzelmodul | 39 | Öffnung der Aufnahme |
| 12 | Medium- bzw. Leimportionen | 40 | Düsenteil |
| 13 | Zuschnitt | 41 | Befestigungsteil |
| 14 | Ventileinheit | 42 | Aufnahmewandung |
| 15 | Ausgabe- bzw. Dosieröffnung | 43 | Gewinde |
| 16 | Steuerleitungen | 44 | Ventilhubeinstelleinheit |
| 17 | Kabelschlauch | 45 | Aufnahme für Hubstelleinheit |
| 18 | Mediumschlauch | 46 | Öffnung der Aufnahme |
| 19 | Grundkörper | 47 | Einstellmittel |
| 20 | Mediumhauptkanal | 48 | Aufnahmewandung |
| 21 | Mediumzweigkanal | 49 | Anschlagteil |
| 22 | Befestigungs(außen)seite | 50 | Zapfen |
| 23 | Kabelkanal | 51 | Hohlraum |
| 24 | Kabelzweigkanal | 52 | Zapfenaufnahme |
| 25 | Gehäuse | 53 | Formschlussverbindung |
| 26 | Schrauben | 54 | Ansatz |
| 27 | Bohrung | 55 | Mediumanschluss |
| 28 | Spulenträger | 56 | Mediumkanal in Kopfabschnitt |
| 28a | Kopfabschnitt | 57 | Ringkanal |
| 28b | Spulenabschnitt | 58 | Ventilkammer |
| 28c | Fußabschnitt | 59 | Kolbenstück |
| 30 | Innenraum | 60 | Freies Ende Anschlagteil |
| 30a | Innraumteilabschnitt | 61 | Ausnehmung |
| 30b | Innraumteilabschnitt | 62 | Dichtungsring |
| 30c | Innraumteilabschnitt | 63 | Schraubenlöcher |

## Patentansprüche

1. Ventil für fließfähige Medien, insbesondere Leimventil, mit einem Ventilgehäuse (25) und einem in einem Ventilinnenraum durch einen Elektro-Magneten bewegbaren Verschlussorgan (32), insbesondere Ventilstößel, das mit einem Verschlussstück in Schließstellung des Ventils (14) an einem Ventilsitz (36) anliegt, und mit einer Ventilhubeinstelleinheit (44) zur Einstellung des Ventilhubs, die ein mindestens abschnittsweise in dem Ventilinnenraum angeordnetes, längliches, in seiner axialen Stellung in dem Ventilinnenraum durch Rotation eines Einstellmittels (47) der Ventilhubeinstelleinheit (44) veränderbares Anschlagteil (49) umfasst, das die Bewegung des Verschlussorgans (32) in Richtung der Ventilhubeinstelleinheit (44) begrenzt, wobei die Ventilhubeinstelleinheit (44) derart ausgebildet ist, dass das Anschlagteil (49) bei Rotation des Einstellmittels (47) nur axial bewegt wird, ohne dass das Anschlagteil (49) mitrotiert, und wobei das Einstellmittel (47) insbesondere um seine Längsmittelachse drehbar mit dem Anschlagteil (49) verbunden ist, **dadurch gekennzeichnet, dass** die drehbare Verbindung des Einstellmittels (47) derart ausgebildet ist, dass das Anschlagteil (49) bezogen auf Axialbewegungen des Einstellmittels (47) auf das Verschlussorgan (32) zu bzw. von diesem weg mit diesem zwangsgekoppelt ist.

2. Ventil gemäß Anspruch 1, **dadurch gekennzeichnet, dass** das Einstellmittel (47) über ein Außengewinde verfügt, mit dem es in ein Bewegungsgewinde einer Aufnahme (45) für das Einstellmittel (47) eingeschraubt ist, dass das Einstellmittel (47) über einen drehfest mit diesem verbundenen Zapfen (50) verfügt, der drehbar in einem länglichen, insbesondere zylindrischen Hohlraum (51) einer insbesondere einstückig mit dem Anschlagteil (49) drehfest verbundenen Zapfenaufnahme (52) gelagert ist, und dass der Zapfen (50) in der Zapfenaufnahme (52) gegen axiale Relativbewegungen zwischen Zapfen (50) und Zapfenaufnahme (52) gesichert ist, insbesondere durch eine Formschlussverbindung zwischen Zapfen (50) und Zapfenaufnahme (52).

3. Ventil gemäß einem oder mehreren der vorhergehenden Ansprüche, **dadurch gekennzeichnet, dass** das Anschlagteil (49) an einem ortfesten Bauteil (28) des Ventils (14) drehsicher, aber in Axialrichtung bewegbar gelagert ist, insbesondere durch Reibschlussverbindung, bevorzugt durch einen Dichtungsring (62) zwischen dem Anschlagteil (49) und dem ortsfesten Bauteil (28).

4. Ventil gemäß einem oder mehreren der vorhergehenden Ansprüche, **dadurch gekennzeichnet, dass** die Ventilhubeinstelleinheit (44) an einem bevorzugt einstückig ausgebildeten Spulenträger (28) des Ventils (14) befestigt ist, auf dem die Windungen einer Spule (31) des Elektro-Magneten aufgewickelt sind.

5. Ventil gemäß Anspruch 4, **dadurch gekennzeichnet, dass** der Spulenträger (28) einen Spulenabschnitt (28b) aufweist, auf den die Spule (31) aufgewickelt ist, sowie einen sich daran anschließenden Kopfabschnitt (28a) mit einer, insbesondere endständigen, Aufnahme (45) für die Ventilhubeinstelleinheit (44).

6. Ventil gemäß einem oder mehreren der vorhergehenden Ansprüche, mindestens gemäß Anspruch 3, **dadurch gekennzeichnet, dass** das ortsfeste Bauteil (28) des Ventils (14), an dem das Anschlagteil (49) drehsicher, aber in Axialrichtung bewegbar gelagert ist, der Spulenträger (28) ist.

7. Ventil gemäß einem oder mehreren der vorhergehenden Ansprüche, **dadurch gekennzeichnet, dass** das Einstellmittel (47) eine Einstellschraube ist.

8. Ventil gemäß einem oder mehreren der vorhergehenden Ansprüche, **dadurch gekennzeichnet, dass** das Anschlagteil (49) an seinem dem Verschlussorgan (32) zugekehrten Ende über mindestens einen Dauermagneten verfügt, der mit mindestens einem gleichgerichteten Dauermagneten des Verschlussorgans (32) an dessen dem Anschlagteil (49) zugekehrten Ende derart zusammenwirkt, dass diese in Schließstellung des Verschlussorgans (32) eine Schließkraft auf das Verschlussorgan (32) ausüben.

## Claims

1. Valve for flowable media, in particular a glue valve, having a valve housing (25) and having a closure member (32), in particular a valve plunger, which is movable in a valve interior space by way of an electromagnet and which bears with a closure piece against a valve seat (36) in the closed position of the valve (14), and having a valve-stroke-setting unit (44) for setting the valve stroke, said valve-stroke-setting unit comprising an elongate stop part (49) which is arranged at least sectionally in the valve interior space and which is adjustable in terms of its axial position in the valve interior space by way of rotation of a setting means (47) of the valve-stroke-setting unit (44) and which limits the movement of the closure member (32) in the direction of the valve-stroke-setting unit (44), wherein the valve-stroke-setting unit (44) is designed in such a way that, during rotation of the setting means (47), the stop part (49) is moved only axially, without the stop part (49) rotating too, and wherein the setting means (47) is connected to the stop part (49) in particular so as to be rotatable about its longitudinal central axis, **characterized in that** the rotatable connection of the setting means (47) is configured in such a way that the stop part (49), in relation to axial movements of the setting means (47) towards the closure member (32) or away therefrom, is positively coupled thereto.

2. Valve according to Claim 1, **characterized in that** the setting means (47) has an outer thread by way of which it is screwed into a movement thread of a receptacle (45) for the setting means (47), **in that** the setting means (47) has a pin (50) which is connected rotationally conjointly thereto and which is mounted rotatably in an elongate, in particular cylindrical, cavity (51) of a pin receptacle (52), which pin receptacle is connected rotationally conjointly to the stop part (49) in particular in one piece, and **in that** the pin (50) is secured in the pin receptacle (52) against axial relative movements between pin (50) and pin receptacle (52), in particular by way of a form-fit connection between pin (50) and pin receptacle (52).

3. Valve according to one or more of the preceding claims, **characterized in that** the stop part (49) is mounted on a positionally fixed component (28) of the valve (14) so as to be secured against rotation but movable in an axial direction, in particular by way of a frictionally engaging connection, preferably by way of a seal ring (62) between the stop part (49) and the positionally fixed component (28).

4. Valve according to one or more of the preceding claims, **characterized in that** the valve-stroke-setting unit (44) is fastened to a coil carrier (28), preferably formed in one piece, of the valve (14), on which coil carrier the windings of a coil (31) of the electromagnet are wound.

5. Valve according to Claim 4, **characterized in that** the coil carrier (28) has a coil section (28b) onto which the coil (31) is wound, and an adjoining head section (28a) with an in particular terminal receptacle (45) for the valve-stroke-setting unit (44).

6. Valve according to one or more of the preceding claims, at least according to Claim 3, **characterized in that** the positionally fixed component (28) of the valve (14) on which the stop part (49) is mounted so as to be secured against rotation but movable in an axial direction is the coil carrier (28).

7. Valve according to one or more of the preceding claims, **characterized in that** the setting means (47) is a setting screw.

8. Valve according to one or more of the preceding claims, **characterized in that** the stop part (49) has at its end facing towards the closure member (32) at least one permanent magnet which interacts with at least one permanent magnet, which is in the same direction, of the closure member (32) at its end facing towards the stop part (49) in such a way that they apply a closing force to the closure member (32) in the closed position of the closure member (32).

## Revendications

1. Vanne pour produits coulants, en particulier vanne à colle, comprenant un boîtier de vanne (25) et un organe de fermeture (32) pouvant être déplacé par un électroaimant dans un espace intérieur de vanne, en particulier un poussoir de vanne qui est en butée contre un siège de vanne (36) avec une pièce de fermeture dans la position de fermeture de la vanne (14), et comprenant une unité de réglage de course de vanne (44) pour régler la course de vanne qui comprend une partie de butée allongée (49), disposée au moins par endroits dans l'espace intérieur de vanne et variable au niveau de sa position axiale dans l'espace intérieur de vanne par une rotation d'un moyen de réglage (47) de l'unité de réglage de course de vanne (44), et qui limite le mouvement de l'organe de fermeture (32) en direction de l'unité de réglage de course de vanne (44), dans laquelle l'unité de réglage de course de vanne (44) est réalisée de telle sorte que lors d'une rotation du moyen de réglage (47), la partie de butée (49) n'est déplacé que de manière axiale sans rotation simultanée de la partie de butée (49), et dans laquelle le moyen de réglage (47) est relié en rotation à la partie de butée (49), en particulier autour de son axe médian longitudinal,
**caractérisée en ce que** la liaison rotative du moyen de réglage (47) est réalisée de telle sorte que la partie de butée (49) est concernant des mouvements axiaux du moyen de réglage (47) s'approchant ou s'éloignant de l'organe de fermeture (32) couplée en force à celui-ci.

2. Vanne selon la revendication 1, **caractérisée en ce que** le moyen de réglage (47) dispose d'un filetage mâle par lequel il est vissé dans un filetage de mouvement d'un logement (45) pour le moyen de réglage (47), **en ce que** le moyen de réglage (47) dispose d'une tige (50) reliée à celui-ci de manière solidaire en rotation et qui est montée en rotation dans une cavité allongée (51), en particulier cylindrique, d'un logement de tige (52) relié à la partie de butée (49) de manière solidaire en rotation, en particulier d'un seul tenant, et **en ce que** la tige (50) est fixée dans le logement de tige (52) contre des mouvements relatifs axiaux entre la tige (50) et le logement de tige (52), en particulier par une liaison par complémentarité de forme entre la tige (50) et le logement de tige (52).

3. Vanne selon une ou plusieurs des revendications précédentes, **caractérisée en ce que** la partie de butée (49) est montée de manière verrouillée en rotation sur un composant stationnaire (28) de la vanne (14) tout en étant montée mobile dans la direction axiale, en particulier par une liaison par adhérence, de préférence par une bague d'étanchéité (62) entre la partie de butée (49) et le composant stationnaire (28).

4. Vanne selon une ou plusieurs des revendications précédentes, **caractérisée en ce que** l'unité de réglage de course de vanne (44) est fixée à un support de bobine (28), de préférence réalisé d'un seul tenant, de la vanne (14) et sur lequel sont enroulés les enroulements d'une bobine (31) de l'électroaimant.

5. Vanne selon la revendication 4, **caractérisée en ce que** le support de bobine (28) présente une section de bobine (28b) sur laquelle est enroulée la bobine (31), ainsi qu'une section de tête (28a) suivant celle-ci, pourvue d'un logement (45), en particulier terminal, pour l'unité de réglage de course de vanne (44).

6. Vanne selon une ou plusieurs des revendications précédentes, au moins selon la revendication 3, **caractérisée en ce que** le composant stationnaire (28) de la vanne (14), sur lequel est monté la partie de butée (49) de manière verrouillée en rotation tout en étant mobile dans la direction axiale, est le support de bobine (28).

7. Vanne selon une ou plusieurs des revendications précédentes, **caractérisée en ce que** le moyen de réglage (47) est une vis de réglage.

8. Vanne selon une ou plusieurs des revendications précédentes, **caractérisée en ce que** la partie de butée (49) dispose à son extrémité tournée vers l'organe de fermeture (32) d'au moins un aimant permanent qui coopère avec au moins un aimant permanent dans le même sens de l'organe de fermeture (32) à l'extrémité de celui-ci, tournée vers la partie de butée (49), de telle sorte qu'ils exercent dans la position de fermeture de l'organe de fermeture (32) une force de fermeture sur l'organe de fermeture (32).
